# EUROPEAN PATENT APPLICATION

(11) **EP 4 183 757 A1**
(43) Date of publication of application: **24.05.2023**
(21) Application number: 21209728.1
(22) Date of filing: 22.11.2021
(51) Int. Cl.: C04B 7/24, C04B 20/04, C04B 28/02, C04B 28/04

(54) **PROCESS FOR THE PRODUCTION OF A CEMENT SUBSTITUTE**

(71) Applicant: VITO NV, 2400 Mol (BE)
(72) Inventor: The designation of the inventor has not yet been filed
(74) Representative: Vandevijver, Pascale

(57) **Abstract**

The present invention relates to a process for the manufacturing of a cement substitute, the process comprising the following steps:
a) mixing an alkaline aluminosilicate containing material with at least one aluminosilicate hydrate containing material,
b) heating the thus obtained mixture to a calcination temperature of below 800°C thereby forming a calcined product comprising a reactive amorphous phase having the alkali ions bound therein.
The process may further comprise a step of cooling the calcined product to a desired temperature. The present invention also relates to a cement substitute obtainable by the process according to the present invention. The cement substitute comprises a reactive amorphous phase of co-calcined alkali aluminosilicate containing material and aluminosilicate hydrate, containing material having alkali ions bound therein. The alkali ions are preferably sodium ions. The present invention also relates to a cement composition containing the cement substitute according to the invention and to a mortar or concrete composition containing such a cement composition.

## Description

The present invention relates to a process for the production of a cement substitute comprising co-calcined alkali alkaline aluminosilicate containing material and aluminosilicate hydrate. The invention further relates to cement substitute obtainable by the process of the present invention. The invention further relates to a cement substitute comprising the co-calcined alkali alkaline aluminosilicate containing material and aluminosilicate hydrate. The present invention also relates to a cement composition comprising the cement substitute.

### Background and prior art

The cement industry is one of the world's largest users of mineral waste streams and is continuously searching for alternative resources to reduce its environmental impact. The cement industry itself is working on strategies to reduce CO2 emissions accompanied with its production. Consequently, there is a need to look for alternative materials to be used as cement substitute to continue the sustainable development of the cement industry.

Cement substitutes are known in the art. Bayer-process bauxite residue (BR; also called "red mud"), a waste product from the extraction of alumina from bauxite ore through the Bayer process, has been considered for use as cement substitute or supplementary cementitious material (SCM) for the cement and concrete industry. The use of industrial residues as supplementary cementitious material (SCM) to replace parts of the cement in cement blends, for example to replace parts of the CO₂ intensive clinker in Portland cement - is one of the key solutions to decrease the CO₂ emissions of the cement industry on the short term. The use of BR as SCM can thus be a solution for both the alumina industry and cement industry.

Bauxite residue (BR) has a complex chemical composition and usually consists of several crystalline phases. For example, bauxite residue may contain iron oxides/ hydroxides as main components, but it may also contain aluminum oxides/ hydroxides, aluminosilicates such as sodalite and cancrinite, quartz, rutile and other minor components. Bauxite residue usually contains between 2-10% Na₂O., Na₂O can have a negative impact on flow and setting of blended cement containing such BR, and products made thereof such as for example concrete and mortar. Na₂O may also negatively impact compressive strength of products incorporating such BR residue and may generate alkali-aggregate reactions in concrete. Alkali-aggregate reactions (AAR) are undesirable as they lead to swelling and subsequent cracking of the concrete and thereby compromise the durability and service life of the concrete. Therefore, BR can only be accepted as a suitable cement substitute material or supplementary cementitious material (SCM) to replace parts of the cement in blended cements if the soluble alkali content can be reduced to an acceptable level.

Several prior art studies disclose ways to reduce the soluble alkali content.

For example Danner et al in Nordic Concrete Research - Publ. No. NCR 62 - ISSUE 1 / 2020 - Article 1, pp. 1-20, discloses treatments to reduce the soluble alkali content with the purpose of enable the use of the treated bauxite residue (BR) as supplementary cementitious material (SCM). In an effort to reduce the amount of soluble sodium in the BR to bind the soluble sodium in less soluble phases, BR was subjected to co-calcination with kaolin at temperatures of 800 °C and above. According to this publication, co-calcination of 80% bauxite residue and 20% kaolin results in the formation of nepheline ((Na,K)AlSiO₄) and reduced alkali release. However due to the formation of nepheline and thus increased binding of sodium ions, the amount of leachable sodium was found to decrease. Unfortunately, this was accompanied by a decrease in the reactivity of the thus obtained supplementary cementitious material (SCM). From Table 6 it is clear that a 70 wt%/30wt% BR/kaolin blend calcined at 800°C reduces the alkali release markedly when used in a cement paste

It is further disclosed by Danner et al. that the calcination process is performed at temperatures between 800-1100 °C in such a way that samples were inserted directly at high temperature with a residence time between 15-45 min., whereafter the samples were taken out directly from the high temperature oven and cooled down rapidly by spreading the material out on a metal plate kept at 20°C. Table 9 shows the compressive strength of mortars where 12% cement is replaced by 70 wt%/30wt% of a co-calcined BR/Kaolin blend. It is clear that a calcination temperature of minimum 1000 °C is required to obtain a mortar with acceptable compressive strengths. The low replacement level of cement (12%) and the modest contribution to strength development appear to be disadvantages of this high temperature co-calcination treatment.

### Present invention

The object of the present invention is to overcome one or more of the above mentioned disadvantages.

A further object of the present invention is to provide a cement substitute that will improve flowability of a blended cement incorporating such a cement substitute or supplementary cementitious material, and increase the compressive strength of a construction product made thereof such as concrete or mortar.

The object of the present invention has been achieved in that a process is provided for the manufacturing of a cement substitute wherein the process comprises the following steps:
a) mixing an alkaline aluminosilicate containing material with at least one aluminosilicate hydrate containing material,
b) heating the thus obtained mixture to a calcination temperature of below 800°C thereby forming a calcined product comprising a reactive amorphous phase having alkali ions bound therein.

Surprisingly it has been found that a cement substitute can be obtained with improved reactivity, that is suitable to at least partially replace cement in cement applications. Moreover it has been found that when the cement substitute of this invention is incorporated in a cement blend with the aim of at least partially replacing the cement therein, flowability of a thus obtained cement mixture is improved, as well as flowability of any further product containing such a cement mixture such as mortar or concrete. It has further been found that the cement substitute of this invention has a positive effect on the compressive strength of a hardened mortar or concrete comprising a cement composition which incorporates the cement substitute of the present invention.

The cement substitute of this invention may at least partially substitute cement in a mortar or concrete composition, and the inventors have observed that higher levels of cement can be substituted by the cement substitute of this invention when compared with prior art cement substitutes based on BR, without significant loss of cement performance. Thereby, a compressive strength desired in such applications may be maintained, even at higher replacement levels of cement by the cement substitute of this invention. It is a further advantage of the present invention that the environmental compatibility of a cement composition incorporating the cement substitute of this invention may be improved. In particular, chromium ions may be effectively immobilised in the cementitious phases, and it has been found that chromium leaching upon contact of a cementitious phase or a mortar or concrete with water can be significantly reduced.

The present invention presents the advantage that it enables the use of bauxite residue (BR) as a supplementary cementitious material (SCM). This addresses the needs of aluminum producers by providing a high-volume utilization of BR, that otherwise often requires disposal as a waste product, and the needs of cement producers by providing a new, large volume SCM to reduce the CO₂ emissions of the cement production.

The process of the present invention gives rise to the formation of a cement substitute, which may also be referred to as a supplementary cementitious material. It shall be clear to the skilled person that where this patent application makes reference to a cement substitute, it also refers to a supplementary cementitious material, and that both terms are synonyms for each other.

In the process of the present invention an alkaline aluminosilicate containing material is mixed with at least one aluminosilicate hydrate containing material. The alkaline aluminosilicate containing material may be in the form of a suspension or a slurry, but it may also be a solid, particulate material. The hydrated aluminosilicate containing material may be used in the form of a suspension, slurry or powder comprising solid particles. Mixing of the alkaline aluminosilicate containing material and the hydrated aluminosilicate containing material may be carried out using any conventional process considered suitable by the skilled person.

The process of this invention may further contain a step of cooling the calcined product to a desired temperature, usually room temperature. The cooling step may either involve a forced cooling or exposing of the calcined product to environment temperature.

The alkaline aluminosilicate containing materials are typically composed of alkaline metals, aluminum, silicon and oxygen. These can be present as synthetic, amorphous, sodium aluminosilicates such as zeolites, and as naturally-occurring minerals. In the present invention the alkaline aluminosilicate containing material preferably contains or is an aluminum sludge. More preferably the alkaline aluminosilicate containing material contains or is a sodium aluminosilicate containing material.

A preferred alkaline aluminosilicate containing material for use in the present invention is an aluminum sludge, more preferably a bauxite residue, in particular a bauxite residue comprising at least one of sodalite and cancrinite. A preferred bauxite residue is a residue originating from the Bayer process, which may be obtained in the form of an alkaline slurry with a pH of between 10-14.5 and a solid content typically between 15-40 wt.%. Nowadays, such slurries are usually disposed and stored in big reservoirs, where it can be a threat to the environment due to its highly alkaline nature. The present invention thus provides an efficient solution to the storage problem of bauxite residues, which otherwise risk to be disposed as a waste stream of aluminum production.

Other examples of alkaline aluminosilicate containing materials suitable for use in this invention include bottom ashes or fly ashes obtained from the combustion of biomass, sodium-rich slags from the non-ferrous metallurgy, and waste from the recycling of soda-lime-silica glass.

Hydrated aluminosilicate containing material suitable for use in the process of this invention, include hydrous aluminum phyllosilicates containing material, in particular kaolin. These hydrated aluminosilicate containing materials usually contain variable amounts of crystalline water, silica, iron, aluminum, magnesium, alkali ions, earth alkali ions and possibly other cations. Preferably the hydrated aluminosilicate containing material comprises a kaolin group clay mineral. More preferably the kaolin group clay mineral is kaolinite. Kaolins are characterized by their fine particle size, and the plate-like or lamellar particle shapes of the clay minerals contained therein. It is usually available in the form of a powder. In the present invention kaolin may be used in the form of commercially available kaolin, that may have a higher or lower degree of purity. In a preferred embodiment, kaolin is used in a purity of at least 40%, which means that it contains at least 40 wt. % of kaolinite.

The weight ratio of the alkaline aluminosilicate containing material versus the hydrated aluminosilicate containing material may vary between 1 and 15, preferably it varies between 2 and 10, more preferably it varies between 4 and 9.

In a preferred embodiment, the weight ratio of the bauxite residue versus kaolin may vary between 1 and 15, preferably it varies between 2 and 10, even more preferably it varies between 4 and 9.

After the alkaline aluminosilicate containing material has been mixed with at least one aluminosilicate hydrate containing material, the thus obtained mixture is subjected to calcination at a temperature of below 800°C, thereby forming a calcined product comprising a reactive amorphous phase having alkali ions bound therein.

After calcination has been accomplished to the point where a calcined product is obtained that comprises a reactive amorphous phase having alkali ions bound therein, the thus obtained calcined product may be subjected to cooling.

The inventors have surprisingly found that by keeping the calcination temperature below 800 °C, a cement substitute can be obtained that shows a drastic increase in reactivity. As a result of this increased reactivity, a significant increase of the 7 and 28 days compressive strength can be obtained when the cement substitute is used as a (partial) substitute for cement in typical applications as cement, or mortar or concrete made thereof. Without wanting to be bound by this theory, the inventors assume that this effect can be explained by the fact that calcination at a temperature below 800°C gives rise to the formation of a reactive amorphous phase, which shows a high pozzolanic reactivity. This amorphous phase is not obtained when calcination is carried out at temperatures above 800°C. It is further believed that the amorphous phase is capable of binding alkali ions, in particular Na ions, therein. This, in consequence, is believed to result in a slower, controlled release of Na ions, which has positive effects on the flowability and setting of the fresh cement, and the later age compressive strength and durability of the hardened cement, and products made thereof.. This is of particular importance when incorporating the cement substitute of this invention in a cement blend for the manufacturing of mortar or concrete.

In a preferred embodiment, at least one of heating to the calcination temperature and cooling of the co-calcined product after calcination has been completed are carried out according to a controlled temperature-time regime. Heating of the mixture may be carried out at a heating rate which is conventionally used in industrial applications, for example heating may be carried out at a heating rate of between 2 and 500°C/min, preferably between 5 and 250°C/min, or at a heating rate of between 2 and 50°C/min. Cooling of the calcined product may be carried out at a cooling rate which is conventionally used in industrial applications, for example a cooling rate of between 20 and 500°C/min, or between 20 and 250°C/min. It is within the scope of the present invention that the heating rate and cooling rate may be the same or different.

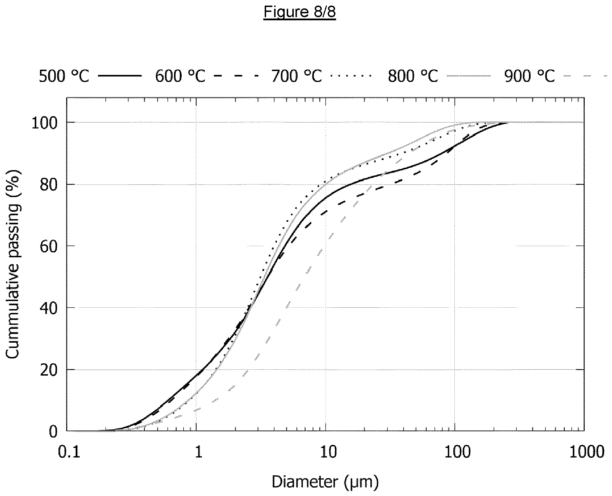

In the present invention the particle size distribution of BRs was measured as a function of the calcination temperature (Figure 8). It has been found that below 800 °C, the particle size distribution stays approximately constant. The particle size distribution after calcination at 900 °C was significantly coarser. This coarsening of the particles by sintering and recrystallisation is assumed to decrease the reactivity or would suggest the need for milling which would be an additional cost. This furthermore underlines the importance of keeping the calcination temperature below 800 °C to minimize this risk to coarsening of the BR particles.

The present invention further relates to the cement substitute obtainable by the process according to the present invention.

The present invention also relates to a cement substitute comprising a reactive amorphous phase of co-calcined alkali aluminosilicate containing material and hydrated aluminosilicate containing material, having alkali ions bound therein. Preferably the alkali ions are sodium ions. The alkali aluminosilicate containing material is preferably a sodium aluminosilicate containing material, more preferably an aluminum sludge. More preferably the aluminum sludge is a bauxite residue (BR) comprising at least one of sodalite and cancrinite. The hydrated aluminosilicate is preferably a clay material, more preferably the clay is a kaolin.

Beside a higher reactive cement substitute it has been found that a mortar or concrete produced from a cement composition in which at least part of the cement has been substituted by the cement substitute of this invention, shows a reduced leaching of Cr, in particular a level of leaching that is well below the limits of most EU member states.

The present invention also relates to a cement composition comprising the cement substitute according to the present invention. The present invention further relates to a mortar or concrete composition comprising the cement composition of the present invention. An effective way of reducing the carbon dioxide level associated with concrete construction is to replace a substantial portion of clinker in the cement blend with the cement substitute of the present invention.

In a preferred embodiment, at least 20 wt.% of the cement may be substituted by the cement substitute of this invention, preferably at least 30 wt. %, more preferably at least 35 wt. %, often at least 40 wt. %.

The present invention will now be described in detail with reference to the following non-limiting examples and figures which are by way of illustration.

### EXAMPLES

### FIGURES

Figure 1: Box-plots of the heat release after 7 days in the R3-test (ASTM C1897-20) compared to class F coal combustion fly ashes.
Figure 2: Heat release during the R3-test in the isothermal calorimeter at 40 °C of the BRs co-calcined with 30 wt% of kaolinite (BR70/K samples).
Figure 3: Heat release during the R3-test in the isothermal calorimeter at 40 °C of the calcined BRs (BR100 samples).
Figure 4: Compressive strengths of standard (EN 196-1) mortars with 30 wt% replacement of CEM I (cement) for calcined BR100.
Figures 5: Compressive strength evolution of mortars using a 30 wt% replacement of the CEM I for the calcined samples.
Figure 6: Box-plot of the compressive strengths of mortars including calcined BRs with kaolin and without kaolin. The results are expressed as a percentage.
Figure 7: Concentration of Cr in the leachate after the batch leaching test as a function of the kaolin addition before co-calcination.
Figure 8: Particle size distributions of co-calcined Bayer-process BR measured as a function of the calcination temperature.

### MATERIALS AND METHODS

X-ray diffraction (XRD) was carried out on a PANalytical Empyrean diffractometer with Co target. The settings were 40 kV, 45 mA, step size 0.0131°2θ and counting time 0.02 s/step for all measurements. Analysis was carried out using HighScore Plus software, supported by the PDF-4 database and an internal database for phase identification.

Rietveld refinement was carried out using a selection of high quality structures from the PDF-4 database and literature using an external rutile standard for quantification of the amorphous. This external standard was measured maximum 10 days after/before the measurements of the samples.

Particle size distributions (PSDs) were obtained using laser diffraction with a Horiba LA-350.The samples were dispersed in isopropanol using 2 minutes of ultrasonification to avoid agglomeration of the powder. Milling was not required after calcination to obtain the reported PSDs.

The density of the calcined materials was measured using He-pycnometry in a Micromeritics AccuPyc II.

The specific surface area was obtained from nitrogen sorption experiments and BET calculations using a Quantachrome Instruments Autosorb iQ.

Thermogravimetric analysis (TGA) was carried out on a selection of samples using a range of heating rates 1-20 °C/min to 1000 °C.

The reactivity of the calcined BRs was assessed via the heat release in the R3 test (ASTM C1897-20).

### Example 1: Calcined samples

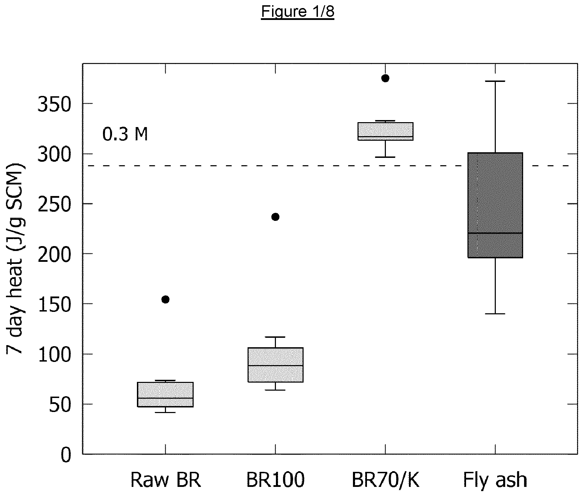

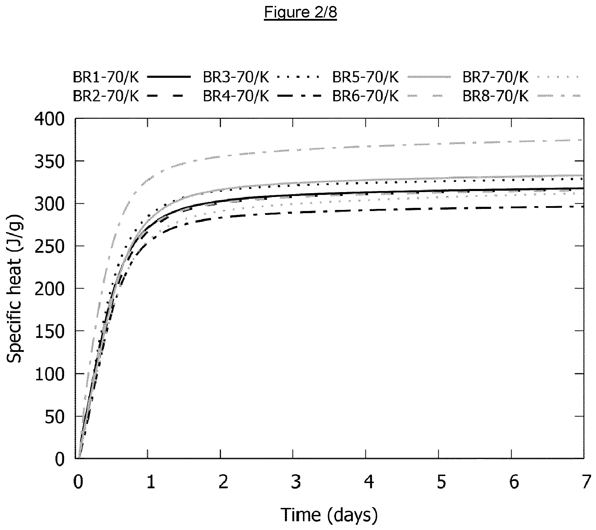

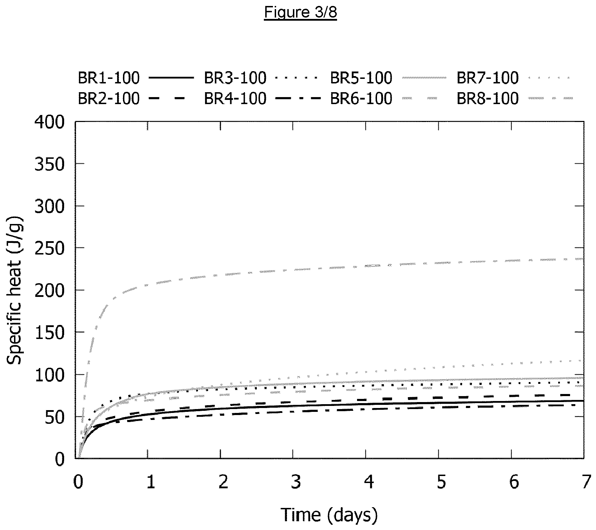

8 bauxite residues (BRs) from 7 different origins were subjected to the following process: calcination at 750 °C (heating/cooling rate 3 °C/min, 1 hour dwell at 750 °C), with and without the addition of kaolinite. The reactivity as supplementary cementitious material (SCM) was tested using R3 tests (ASTM C1897-20). (Figures 1-3).

The resulting samples were named using an abbreviation of the BR origin, the BR content in wt% and "/K", indicating the amount of kaolinite added: i.e. BR1-100, BR1-70/K, BR2-100, BR2-70/K, BR3-100, BR3-70/K, BR4-100, BR4-70/K, BR5-100, BR5-70/K, BR6-100, BR6-70/K, BR7-100, BR7-70K, BR8-100, BR8-70/K. When referring to calcined samples with kaolin in general BRx-70/K (x=1-8) is used, while BRₓ-100 (x=1-8) refers to the calcined BRs without kaolinite.

### Example 2: Mortar comprising co-calcined material and superplasticizer

Mortars comprising the co-calcined bauxite residues were mixed and tested conforming to EN 196-1. In the mortars part of the reference cement CEM I was replaced with co-calcined BR, in particular 30 wt%. PCE superplasticizer was added to achieve the same mortar flow as the CEM I without substitution of BR. The amount of superplasticizer was determined to reach a mortar flow of 20.25 ± 1 and given in Table 1. The mortar flow was measured directly after the mixing procedure according to EN 196-1.

**Table 1: Superplasticizer dosage required to obtain the same mortar slump flow as the reference.**

| **Calcined sample** | **Superplasticizer need (ml/kg binder)** |
|---|---|
| BR1-100 | 8.88 |
| BR2-100 | 4.44 |
| BR3-100 | 2.22 |
| BR1-70/K | 4.44 |
| BR2-70/K | 4.44 |
| BR3-70/K | 4.00 |

### Example 3: Compressive strength evolution of mortar comprising calcined BR with and without kaolin

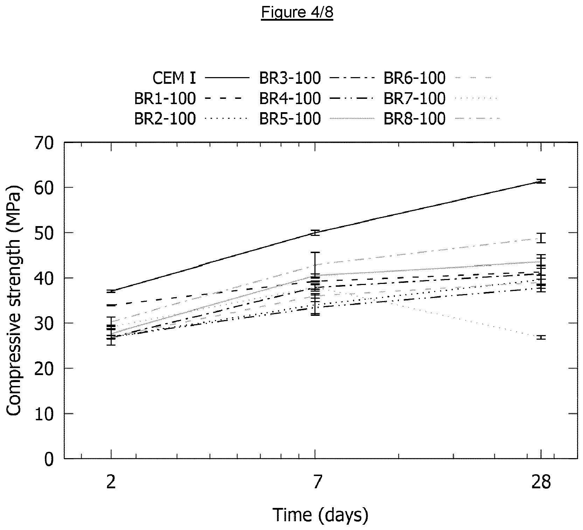

The compressive strength of mortars including calcined BR has been found to vary depending on the origin of the BRx-100 (x=1-8), if no kaolin is added (Figure 4). At 28 days, the strength is rather low and the variation is similar as for the reactivity, indicating that the low reactivity results in a limited contribution to the strength. An outlier is the BR7-100, which seems to have caused problems in the mortars. The low strength at 28 days of BR7-100 is most likely caused by the inhomogeneity of the mixtures, rather than the decrease of strength in time. The strength after 2 days is high for mortars with 30 wt% BRx-100 replacement and mostly around 27 MPa.

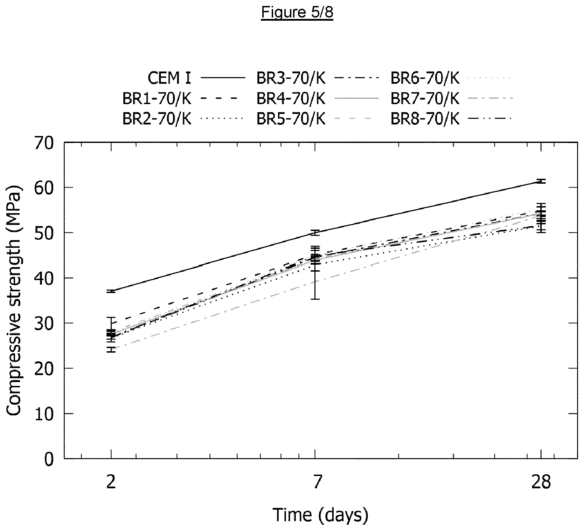

An increased SCM performance with kaolinite addition is also reflected in the compressive strength results. The data in Figure 5 show that 2 days strength are similarly high as for the BRx-100 samples, but 7 and 28 days strengths have significantly increased. All cement blends are conforming to a cement strength class of 42.5 N according to EN 197-1.

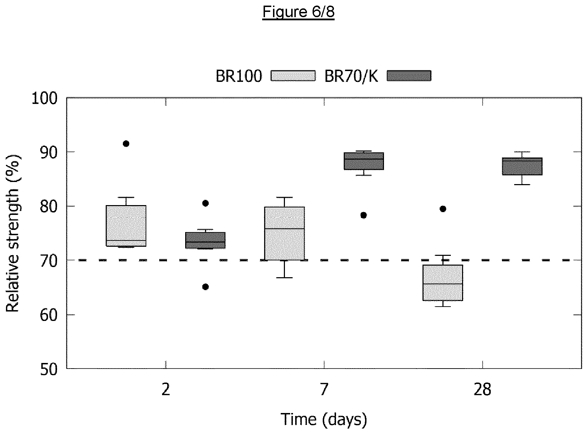

Figure 6 shows the relative strengths of the blended cement mortar bars comprising co-calcined products. The relative strength is calculated by dividing the strength of cement including calcined BRs with kaolin by the strength of the reference cement. This is expressed as a percentage and the results are shown as box-plots. The variation between BRs from different origin and the the relative strength are significantly ameliorated by the co-calcination with kaolin. The relative strengths of 84-90% after 28 days reported in Table 2 are high in comparison with commercial SCMs for mortars with 30 wt% replacement of the CEM I.

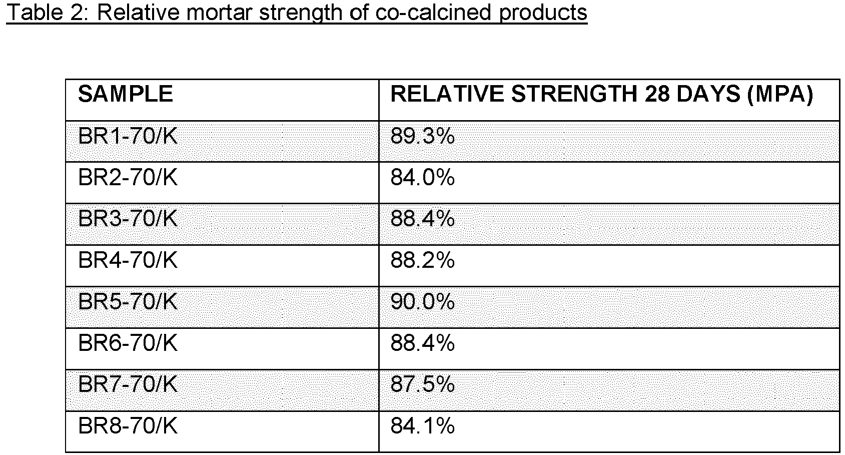

### Example 4: Cr Leaching

Crushed mortars after 28 days were used for batch leaching tests according to EN 12457-2. The broken mortars were crushed < 4 mm using a jaw crusher and shaken for 24 hours in demineralized water (L/S = 10). The chromium and sodium concentration in the leachate was studied using ICP-OES.

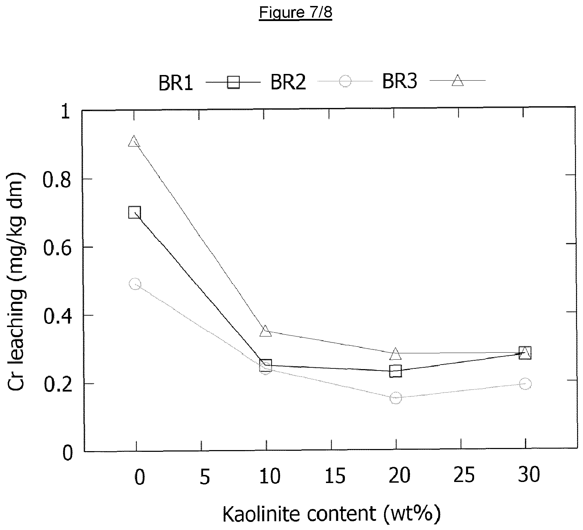

The Cr leaching is presented in Figure 7.

Starting from an addition of 10 wt% of kaolin, the Cr concentration in the leachate is significantly reduced and all co-calcined samples with bauxite residue to kaolin ratios between 2.3 and 9 result in low leaching of Cr from the tested mortars. This reduction is important, as it results in a leaching below leaching limits in many EU countries (Table 3), whereas the Cr leaching of the mortars with bauxite residues calcined without kaolin addition is in most cases above the limits.

Table 3 shows the Limit values to the leaching of total Cr in construction materials. Most countries require the same leaching methodology as carried out in the experiments and can be directly compared.

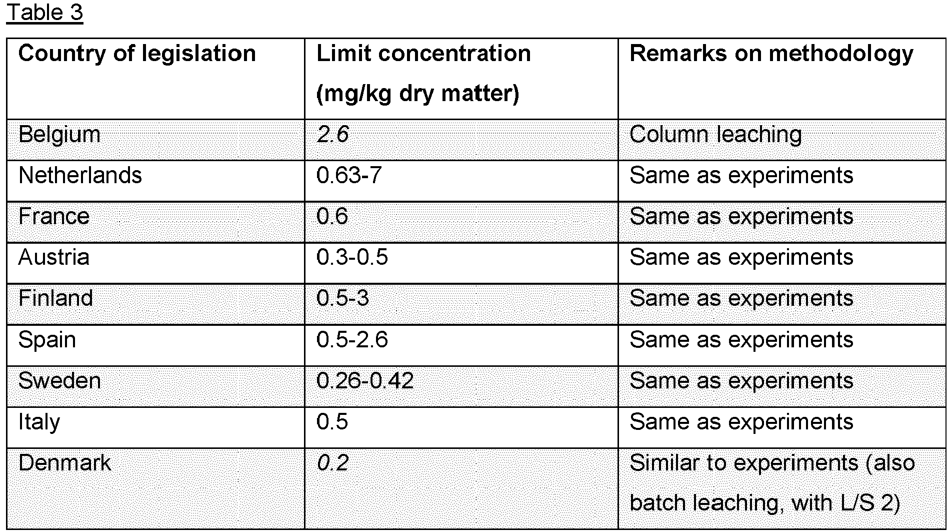

## Claims

1. A process for the manufacturing of a cement substitute, the process comprising the following steps:
a) mixing an alkaline aluminosilicate containing material with at least one aluminosilicate hydrate containing material,
b) heating the thus obtained mixture to a calcination temperature of below 800°C thereby forming a calcined product comprising a reactive amorphous phase having the alkali ions bound therein.

2. Process according claim 1 whereby the alkaline aluminosilicate containing material is an aluminum sludge.

3. Process according to claim 2 whereby the aluminum sludge is a bauxite residue comprising at least one of sodalite and cancrinite.

4. Process according to any one of claims 1-3, wherein the alkaline aluminosilicate containing material is a sodium aluminosilicate containing material.

5. Process according to any one of the claims 1-4 whereby the aluminosilicate hydrate containing material comprises a kaolin group clay material.

6. Process according to claim 5 whereby the kaolin group clay material is kaolinite.

7. Process according to any one of the claims 1-6 whereby the weight ratio of the alkaline aluminosilicate containing material versus the aluminosilicate hydrate containing material varies between 1 and 15, preferably between 2 and 10, more preferably between 4 and 9.

8. Process according to any one of claims 1-7 whereby at least one of heating to the calcining temperature is carried out according to a controlled temperature-time regime.

9. Process according to claim 8, wherein heating of the mixture is carried out at a heating rate of between 2 and 50°C/min, preferably between 2 and 20°C/min.

10. Cement substitute obtainable by the process according to any one of the claims 1-9.

11. Cement substitute comprising a reactive amorphous phase of co-calcined alkali aluminosilicate containing material and aluminosilicate hydrate containing material, having alkali ions bound therein.

12. Cement substitute according to claim 11, wherein the alkali ions are sodium ions.

13. Cement composition comprising the cement substitute according to any one of the claims 11-12, or the cement substitute obtained from the process according to any one of claims 1-9.

14. Mortar or cement composition containing the cement composition according to claim 13.

15. Mortar or cement composition according to claim 14, whereby at least 20 wt.% of the cement is substituted by the cement substitute.
